# EUROPEAN PATENT APPLICATION

(11) **EP 4 611 102 A1**
(43) Date of publication of application: **03.09.2025**
(21) Application number: 23938013.2
(22) Date of filing: 25.05.2023
(51) Int. Cl.: H01M 10/0567

(54) **SECONDARY BATTERY AND ELECTRIC DEVICE**

(71) Applicant: Contemporary Amperex Technology Co., Limited, Ningde, Fujian 352100 (CN)
(72) Inventor: GUO, Jie, Ningde, Fujian 352100 (CN); HAN, Changlong, Ningde, Fujian 352100 (CN); WU, Zeli, Ningde, Fujian 352100 (CN); ZHANG, Cuiping, Ningde, Fujian 352100 (CN); WU, Qiao, Ningde, Fujian 352100 (CN); JIANG, Bin, Ningde, Fujian 352100 (CN); FAN, Peng, Ningde, Fujian 352100 (CN); WANG, Guan, Ningde, Fujian 352100 (CN)
(74) Representative: Kraus & Lederer PartGmbB
(86) International application number: PCT/CN2023/096401
(87) International publication number: WO 2024/239342

(57) **Abstract**

The present application provides a secondary battery and an electrical apparatus. The secondary battery comprises a battery case having an accommodating cavity, a cell assembly disposed in the accommodating cavity, and an electrolyte containing a first additive, the first additive comprising a sulphate compound; wherein a ratio W/R of a mass percentage W of the sulphate compound to a residual space R is within a range of 0.03% to 40% based on the total mass of the electrolyte, which enables the secondary battery to achieve a balance between service life and energy density.

## Description

### TECHNICAL FIELD

The present application relates to the technical field of secondary batteries, and in particular to a secondary battery and an electrical apparatus.

### BACKGROUND

In recent years, secondary batteries are more widely used in portable electronic devices, energy storage power source systems such as water power, thermal power, wind power and solar power stations, as well as power tools, electric bicycles, electric motorcycles, electric vehicles, military equipment, aerospace and other fields. With the goal of carbon peaking and carbon neutrality and the improvement of environmental protection requirements, secondary batteries are driven to develop in the direction of higher energy density, power performance, cycle life, etc.

Secondary batteries generate gas byproducts as a result of various chemical reactions during the electrical cycling process, resulting in the defect of gas generation inside the battery and affecting service life of the secondary batteries. By expanding the space inside a battery case for gas byproducts, the risk of deformation of the case caused by gas generation can be reduced, which prolongs the service life of the secondary batteries but reduces the energy density thereof. It is necessary to provide a secondary battery that can reduce the defect of gas generation and has a balance between the service life and the energy density.

### SUMMARY

In view of the problems in the BACKGROUND, the present application provides a secondary battery, aiming to achieve a balance between service life and energy density of the secondary battery.

A first aspect of the present application provides a secondary battery, which comprises a battery case having an accommodating cavity, a cell assembly disposed in the accommodating cavity, and an electrolyte containing a first additive, the first additive being selected from a sulphate compound;
where based on the total mass of the electrolyte, a mass percentage W and a residual space R of the first additive satisfy: 0.03%≤W/R≤40%, and optionally 0.03%≤W/R≤20%, and the residual space R is represented as $R = \frac{V 1 - \left(V2+V3\right)}{C} mL / Ah$, where V1 represents an internal volume of the accommodating cavity of the secondary battery; V2 represents a volume of the cell assembly; V3 represents a volume of the electrolyte; and C represents a discharge capacity of the secondary battery.

In the secondary battery of the present application, the sulfate compound can form an inorganic SEI (solid electrolyte interphase) film at the interface between the electrolyte and a negative electrode plate, effectively reducing side reactions occurring due to the contact between the electrolyte and the negative electrode plate, reducing gas generation, and prolonging the service life of the secondary battery; an appropriate residual space R may provide some space for the battery case to accommodate gas generated by side reactions of the battery, but an increased residual space R may reduce the energy density of the secondary battery. When the mass percentage W of the sulfate compound and the residual space R satisfy the above relationship, the battery case may not only accommodate the gas that is generated by the side reactions of the electrode plate and that is reduced due to the addition of the sulfate compound, but also achieve an increase in the energy density, thereby balancing the service life and the energy density of the secondary battery.

In any embodiment, the sulphate compound comprises one or more of 4,4'-bis(ethylene sulfate), ethylene sulfate, diethyl sulfate, dimethyl sulfate, and 4,4'-bi(1,3,2-dioxathiolane)-2,2,2,2-tetraoxide, and optionally comprises one or more of 4,4'-bis(ethylene sulfate) and ethylene sulfate.

The above-mentioned sulfate compound may form an inorganic SEI film at the interface between the electrolyte and the negative electrode plate, effectively reducing the side reactions occurring due to the contact between the electrolyte and the negative electrode plate, reducing gas generation, and prolonging the service life of the secondary battery.

In any embodiment, based on the total mass of the electrolyte, the mass percentage W of the first additive is 0.045% to 2%, and optionally 0.1% to 2%.

The mass percentage of the first additive is controlled within an appropriate range, which can not only reduce interfacial side reactions, but also reduce the impact of the introduction of the first additive on the electrolyte, for example, the impact on the fast charge and power performances of the secondary battery, thereby balancing the service life and electrical performance of the secondary battery.

In any embodiment, the residual space R is 0.05 mL/Ah to 3 mL/Ah, and optionally 0.1 mL/Ah to 1.5 mL/Ah.

The residual space Ris controlled within an appropriate range, which can not only provide sufficient space for the cell assembly to improve the energy density of the secondary battery, but also provide sufficient space to accommodate the gas generated by the side reactions of the cell assembly to reduce an internal pressure of the battery case or maintain the internal pressure basically stable, thereby improving safety of the secondary battery.

In any embodiments, the electrolyte contains a second additive, the second additive being selected from one or more of a fluorocarbonate compound and a sulphonate compound.

The second additive comprises one or more of a fluorocarbonate compound and a sulphonate compound, which is conducive to forming an inorganic SEI film rich in LiF and Li₂SO₃ on a negative electrode plate side, and conducive to furtherreducing the side reactions occurring due to the contact between the electrolyte and the negative electrode plate, reducing gas generation, and prolonging the service life of the secondary battery.

In any embodiment, the fluorocarbonate compound comprises one or more of fluoroethylene carbonate, 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro -2-methylethylene carbonate, or trifluoromethylethylene carbonate, and optionally comprises fluoroethylene carbonate and 1,2-difluoroethylene carbonate; and/or,
the sulfonate compound comprises one or more of 1,3-propane sultone, propene sultone, and 3-fluoro-1,3-propane sultone, and optionally comprises 1,3-propane sultone.

In any embodiment, the second additive comprises fluoroethylene carbonate and 1,3-propane sultone. In any embodiment, the second additive comprises 1, 2-difluoroethylene carbonate and 1,3-propane sultone. A mass ratio of the fluoroethylene carbonate or 1,2-difluoroethylene carbonate to the 1,3-propane sultone is (0.1-50):1, and optionally (0.1-30):1.

The above-mentioned fluorocarbonate compound and sulphonate compound both may form an inorganic SEI film at the interface between the electrolyte and the negative electrode plate, effectively reducing the side reactions occurring due to the further contact between the electrolyte and the negative electrode plate, reducing gas generation, and prolonging the service life of the secondary battery.

In any embodiment, based on the total mass of the electrolyte, the mass percentage W of the first additive and a mass percentage A of the second additive satisfy: 0.045%≤ W+A≤ 15%, and optionally 0.1% ≤W+A≤ 11%.

W+A satisfies the above relationship, which can not onlyform a sufficient amount of inorganic SEI film at the interface between the electrolyte and the negative electrode plate to reduce gas generation and prolong the service life of the battery, and can also reduce the impact of the introduction of the first additive and the second additive on the fast charge and power performances of the secondary battery, while balancing the service life and the electrical performance of the secondary battery.

In any embodiment, based on the total mass of the electrolyte, the mass percentage A of the second additive is 0.05% to 10%, and optionally 0.5% to 7%.

The mass percentage of the second additive is controlled within an appropriate range, which can not only reduce interfacial side reactions, but also reduce the impact of the introduction of the second additive on the fast charge and power performances of the secondary battery, and balance the service life and electrical performance of the secondary battery.

In any embodiment, the cell assembly comprises a positive electrode current collector and a positive electrode film layer located on at least one side of the positive electrode current collector and comprising at least a positive electrode active material, and the positive electrode current collector has a thickness of 4 µm to 14 µm, and optionally 5 µm to 13 µm.

In any embodiment, the secondary battery comprises a negative electrode current collector, and the negative electrode current collector has a thickness of 3 µm to 10 µm, and optionally 4 µm to 8 µm.

The thickness of the positive electrode current collector and/or the negative electrode current collector is controlled within an appropriate range, which can not only meet the requirements of mechanical strength and the requirements of electron conduction during charging and discharging, and can also release some space to accommodate more positive electrode active material/negative electrode active material, thereby improving the energy density of the secondary battery, or release some space to accommodate gas in the battery to reduce the internal pressure of the battery case or maintain the internal pressure basically stable, thereby prolonging the service life of the secondary battery and reducing the potential safety hazards of the secondary battery.

In any embodiment, the secondary battery has an injection coefficient of 1 g/Ah to 3 g/Ah, and optionally 1.5 g/Ah to 2.5 g/Ah.

The injection coefficient of the secondary battery is controlled within an appropriate range, which can not only provide enough electrolyte to meet the needs of the secondary battery, but also release some spaceto accommodate more positive electrode active material/negative electrode active material, thereby improving the energy density of the secondary battery, or release some space to accommodate gas in the battery to reduce the internal pressure of the battery case or maintain the internal pressure basically stable, thereby prolonging the service life of the secondary battery and reducing potential safety hazards of the case.

In any embodiment, the electrolyte comprises a solvent, the solvent comprising at least one of a carboxylate solvent, a cyclic carbonate solvent, and a linear carbonate solvent.

The carboxylate solvent, the cyclic carbonate solvent or the linear carbonate solvent can be used in combination with the first additive and/or the second additive to allow the secondary battery to have both excellent service life and energy density.

In any embodiment, the solvent comprises at least two of a carboxylate solvent, a cyclic carbonate solvent, and a linear carbonate solvent.

In any embodiment, based on the total mass of the solvent, the cyclic carbonate solvent has a mass percentage X of 2% to 35%.

In any embodiment, based on the total mass of the solvent, the cyclic carbonate solvent has a mass percentage X of 20% to 35%, the linear carbonate solvent has a mass percentage Y of 0% to 75%, and the carboxylate solvent has a mass percentage of (100% - X - Y).

The carboxylate solvent, the cyclic carbonate solvent and the linear carbonate solvent are used in combination and the mass percentages of the carboxylate solvent, the cyclic carbonate solvent and the linear carbonate solvent are controlled within an appropriate range, which helps to reduce viscosity of the electrolyte, improve the kinetic performance and wettability of the electrolyte, and provide the battery with a long service life.

In any embodiment, the carboxylate solvent comprises a structure represented by Formula I, 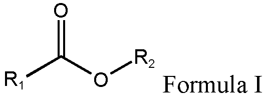
where R₁ and R₂ each independently comprise a C₁₋₁₀ alkyl group, and optionally, the carboxylate solvent comprises one or more of methyl formate, methyl acetate, ethyl acetate, butyl acetate, methyl propionate, methyl butyrate, ethyl butyrate, propyl butyrate, butyl butyrate, isopropyl acetate, and isoamyl acetate; and/or
the cyclic carbonate solvent comprises one or more of ethylene carbonate and propylene carbonate; and/or
the linear carbonate solvent comprises at least one of dimethyl carbonate, diethyl carbonate, methyl propyl carbonate and ethyl methyl carbonate.

The above materials can be used in combination with the first additive and/or the second additive to make the secondary battery have excellent service life and energy density.

In any embodiment, the linear carbonate solvent comprises two of dimethyl carbonate, diethyl carbonate, methyl propyl carbonate and ethyl methyl carbonate.

In any embodiment, the linear carbonate solvent comprises dimethyl carbonate and ethyl methyl carbonate, and a mass ratio of the dimethyl carbonate and the ethyl methyl carbonate is 5:90 to 70:10, and optionally 10:80 to 60:10.

The solvent further comprises two types of linear carbonate solvents and/or controls two types of linear carbonate solvents, which can reduce the viscosity of the electrolyte, improve the wettability and kinetic performance of the electrolyte, and balance the service life and gas generation performance of the battery.

In any embodiments, the secondary battery comprises at least one or more of a lithium secondary battery, a sodium secondary battery and a potassium secondary battery.

In a second aspect, the present application provides an electrical apparatus, comprising a secondary battery in the first aspect of the present application.

### BRIEF DESCRIPTION OF DRAWINGS

Fig. 1 is a schematic diagram of a secondary battery according to an embodiment of the present application;
Fig. 2 is an exploded view of the secondary battery according to an embodiment of the present application shown in Fig. 1;
Fig. 3 is a schematic diagram of a battery module according to an embodiment of the present application;
Fig. 4 is a schematic diagram of a battery pack according to an embodiment of the present application;
Fig. 5 is an exploded view of the battery pack according to an embodiment of the present application shown in Fig. 4;
Fig. 6 is a schematic view of an electrical apparatus in which a secondary battery is used as a power source according to an embodiment of the present application.

### Description of reference numerals:

1 battery pack; 2 upper box; 3 lower box; 4 battery module; 5 secondary battery; 51 case; 52 cell assembly; 53 cover plate.

### DETAILED DESCRIPTION

Hereinafter, embodiments of an electrolyte, a secondary battery and an electrical apparatus of the present application are described in detail and specifically disclosed with reference to the drawings as appropriate. However, there may be cases where unnecessary detailed description is omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

"Ranges" disclosed in the present application are defined in the form of lower limits and upper limits, a given range is defined by the selection of a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method comprises steps (a) and (b), meaning that the method may comprise steps (a) and (b) performed sequentially, or may comprise steps (b) and (a) performed sequentially. For example, the reference to the method may further comprise step (c), meaning that step (c) may be added to the method in any order. For example, the method may comprise steps (a), (b) and (c), or may further comprise steps (a), (c) and (b), or may further comprise steps (c), (a) and (b), and the like.

Unless otherwise specifically stated, the terms "comprising" and "including" mentioned in the present application may be open-ended, or may be closed-ended. For example, the "comprising" and "including" may indicate that it is also possible to comprise or comprise other components not listed, and it is also possible to comprise or comprise only the listed components.

Unless otherwise specifically stated, the term "or" is inclusive in the present application. For example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

Gas generated by interfacial side reactions between an electrolyte and an electrode plate causes an increase in internal pressure of a battery case, which is easy to lead to deformation of the battery case and even affects service life of the battery. Generally, the space in the battery case not occupied by the cell assembly and the electrolyte is expanded to provide enough space to accommodate gas to reduce the internal pressure, thereby improving the safety and prolonging the service life of the battery. However, this will also lead to a decrease in energy density of the battery and thus fails to meet the market demand. Therefore, it is necessary to design a novel battery achieving a balance between the service life and the energy density.

### [Secondary battery]

In view of this, the present application provides a secondary battery, which comprises a battery case having an accommodating cavity, a cell assembly disposed in the accommodating cavity, and an electrolyte containing a first additive, the first additive being selected from a sulphate compound;
where based on the total mass of the electrolyte, a mass percentage W and a residual space R of the first additive satisfy: 0.03%≤W/R≤40%, and optionally 0.03%≤W/R≤20%. The residual space R is represented as $R = \frac{V 1 - \left(V2+V3\right)}{C} mL / Ah$, where V1 represents an internal volume (ml) of the accommodating cavity of the secondary battery; V2 represents a volume (ml) of the cell assembly; V3 represents a volume (ml) of the electrolyte; and C represents a discharge capacity (Ah) of the secondary battery.

Herein, "W/R" represents a ratio of the mass percentage W to the residual space R (mL/Ah).

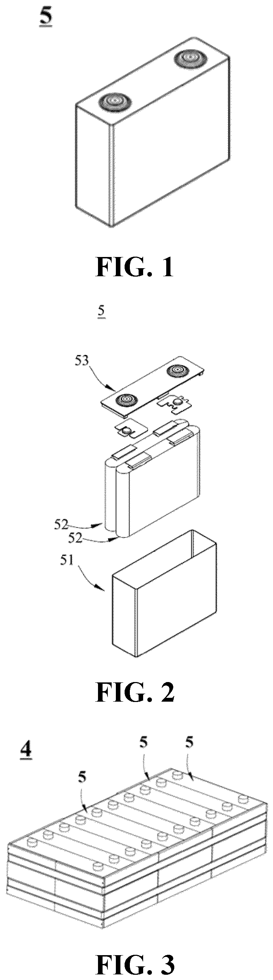

The accommodating cavity of the secondary battery typically represents the internal space of the battery case. In some embodiments, as shown in Fig. 2, the case 51 may comprise a base plate and a side plate connected onto the base plate, and the base plate and the side plate enclose to form the accommodating cavity.

In the present application, the capacity of the secondary battery denoted with C is a discharge capacity of the secondary battery. In general, the battery capacity needs to be preset to meet requirements for different application scenes during preparation of the secondary battery. The preset battery capacity is a design capacity. After the secondary battery is prepared, the discharge capacity can be obtained by testing. With respect to the design capacity and the discharge capacity of the secondary battery, in some cases, such as in a battery preparation process, the discharge capacity is replaced with the design capacity for material calculation and preparation; in other cases, such as after the battery is freshly prepared, the slight difference between the design capacity and the discharge capacity is acceptable in the art and the two may be used alternatively. It will be appreciated that in the battery preparation process, the design capacity may be used as the discharge capacity to adjust the residual space to obtain the desired secondary battery. For a prepared secondary battery, the discharge capacity is used for calculating and adjusting the residual space of the secondary battery. Methods for testing the discharge capacity of the secondary battery, or methods for calculating the design capacity of the secondary battery, are open and known to those skilled in the art.

In some embodiments, a method for testing the discharge capacity of a single cell of the secondary battery may comprise: placing the secondary battery in a 25°C environment for standing until the battery temperature is constant at 25°C; charging the secondary battery to a charge cut-off voltage with a current at 1/3C1; standing for 10 minutes; charging the secondary battery to a charge cut-off voltage with a current at 0.05C1; standing for another 10 minutes; discharging to a discharge cut-off voltage with a current at 1/3C1, recording the discharge capacity here as a battery discharge capacity C at "25°C@0.33C1", where C1 is a rated capacity marked on the cell. The rated capacity marked on the cell is also known as a mark capacity.

In the present application, a desired value of the residual space R may be obtained by adjusting one or more parameters comprising V1, V2, V3, and C. In some embodiments, the case of the secondary battery has no change, and the desired value of the residual space R may be obtained by adjusting one or more parameters comprising V2, V3, and C. In some embodiments, the case of the secondary battery and the capacity of the battery have no change, and the desired value of the residual space R may be obtained by adjusting one or more parameters comprising V2 and V3. The value of the residual space R may be adjusted in ways comprising, but not limited to, those described above, and those skilled in the art may obtain the desired value of the residual space R by adjusting one or more parameters comprising V1, V2, V3, and C based on acquired knowledge of ordinary skills in the art.

In some embodiments, based on the total mass of the electrolyte, the ratio W/R of the mass percentage W of the sulphate compound to the residual space R is optionally 0.03%, 0.05%, 0.1%, 0.5%, 1%, 2%, 4%, 5%, 6%, 8%, 10%, 12%, 14%, 15%, 16%, 18%, 20%, 22%, 25%, 28%, 30%, 34%, 35%, 36%, 40%, or a value in a range consisting of any two of the above.

In some embodiments, based on the total mass of the electrolyte, the mass percentage W of the first additive and the residual space R satisfy: 0.1%≤W/R≤40%, 0.2%≤W/R≤40%, 0.5%≤W/R≤40%, 1%≤W/R≤40%, 4%≤W/R≤40%, 10%≤W/R≤40%, 0.1%≤W/R≤20%, 0.2%≤W/R≤20%, 0.5%≤W/R≤20%, 1%≤W/R≤20%, and 4%≤W/R≤20%.

In the secondary battery of the present application, the sulfate compound can form an inorganic SEI film at the interface between the electrolyte and the negative electrode plate, effectively reducing the side reactions occurring due to the contact between the electrolyte and a negative electrode plate, reducing pulverization of the negative electrode plate and gas generation, and prolonging the service life of the secondary battery.

In the secondary battery, when the residual space R is reduced, the space occupied by the cell assembly is increased and the energy density of the secondary battery is improved. However, at this point, the space for accommodating gas in the battery case is reduced, and the internal pressure of the battery case increases, which increases the risk of deformation of the case and shortens the service life of the battery cell. When W/R satisfies the above range, the battery case may not only accommodate the gas that is generated by side reactions of the electrode plate and that is reduced due to the addition of the sulfate compound, but also provide a space to accommodate more or larger cell assembly while prolonging the service life of the secondary battery and improving the energy density thereof.

In some embodiments, the sulphate compound comprises one or more of 4,4'-bis(ethylene sulfate), ethylene sulfate, diethyl sulfate, dimethyl sulfate, and 4,4'-bi(1,3,2-dioxathiolane)-2,2,2,2-tetraoxide, and optionally comprises one or more of 4,4'-bis(ethylene sulfate) and ethylene sulfate.

In some embodiments, the sulphate compound comprises 4,4'-bis(ethylene sulfate). In some embodiments, the sulphate compound comprises ethylene sulfate. In some embodiments, the sulphate compound comprises dimethyl sulfate. In some embodiments, the sulphate compound comprises 4,4'-bi(1,3,2-dioxathiolane)-2,2,2,2-tetraoxide. In some embodiments, the sulphate compound comprises 4,4'-bis(ethylene sulfate) and dimethyl sulfate In some embodiments, the sulphate compound comprises 4,4'-bis(ethylene sulfate).

The above-mentioned sulfate compound may form an inorganic SEI film at the interface between the electrolyte and the negative electrode plate, effectively reducing the side reactions occurring due to the contact between the electrolyte and the negative electrode plate, reducing gas generation, and prolonging the service life of the secondary battery.

In some embodiments, based on the total mass of the electrolyte, a mass percentage W of the first additive is 0.045% to 2%, and optionally 0.1% to 2%, 0.05 to 2%, 0.15 to 1.5%, 0.1% to 2%, and 0.5% to 1.5%.

In some embodiments, based on the total mass of the electrolyte, the mass percentage W of the first additive is optionally 0.05%, 0.1%, 0.15%, 0.2%, 0.4%, 0.5%, 0.6%, 0.8%, 1%, 1.2%, 1.4%, 1.5%, 1.6%, 1.8%, 2%, or a value in a range consisting of any two of the above

When the mass percentage of the first additive is too low, it is not enough to form the SEI film of a sufficient thickness at the interface to effectively inhibit the interfacial side reactions; and when the mass percentage of the first additive is too high, it will affect the power performance and fast charge performance of the secondary battery. The mass percentage of the first additive is controlled within an appropriate range, which can not only reduce interfacial side reactions, but also reduce the impact of the introduction of the first additive on the fast charge and power performances of the secondary battery, thereby balancing the service life and electrical performance of the secondary battery.

In some embodiments, the residual space R is 0.05 mL/Ah to 3 mL/Ah, and optionally 0.1 mL/Ah to 1.5 mL/Ah, 0.5 mL/Ah to 3 mL/Ah, 1 mL/Ah to 3 mL/Ah, 1.5 mL/Ah to 3 mL/Ah, and 0.05 mL/Ah to 1.5 mL/Ah.

In some embodiments, R is optionally 0.05 mL/Ah, 0.1 mL/Ah, 0.2 mL/Ah, 0.4 mL/Ah, 0.5 mL/Ah, 0.6 mL/Ah, 0.8 mL/Ah, 1 mL/Ah, 1.2 mL/Ah, 1.4 mL/Ah, 1.5 mL/Ah, or a value in a range consisting of any two of the above.

When the residual space R is greater than the above range, although the space for accommodating gas becomes larger, the energy density of the secondary battery will decrease; when the residual space R is smaller than the above range, the space for accommodating gas is reduced, which increases the risk of case deformation. The residual space Ris controlled within an appropriate range, which can not only improve the energy density of the secondary battery, but also provide sufficient space to accommodate the gas generated by the side reactions of the cell assembly to reduce the internal pressure of the battery case or maintain the internal pressure basically stable, thereby improving safety of the secondary battery and balancing the energy density and the safety of the secondary battery.

In some embodiments, the electrolyte contains a second additive, the second additive being selected from one or more of a fluorocarbonate compound and a sulphonate compound.

In some embodiments, the second adhesive comprises a fluorocarbonate compound. In some embodiments, the second adhesive comprises a sulphonate compound. In some embodiments, the second adhesive comprises a sulphate compound and a fluorocarbonate compound.

The second additive comprises at least one of a fluorocarbonate compound and a sulphonate compound, which is conducive to forming an inorganic SEI film rich in LiF and Li₂SO₃ on a negative electrode plate side, and conducive to furtherreducing the side reactions occurring due to the contact between the electrolyte and the negative electrode plate, reducing gas generation, and prolonging the service life of the secondary battery.

In some embodiments, the fluorocarbonate compound comprises one or more of fluoroethylene carbonate, 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro -2-methylethylene carbonate, or trifluoromethylethylene carbonate, and optionally comprises fluoroethylene carbonate and 1, 2-difluoroethylene carbonate.

In some embodiments, the sulfonate compound comprises one or more of 1,3-propane sultone, propene sultone, and 3-fluoro-1,3-propane sultone, and optionally comprises 1,3-propane sultone.

In some embodiments, the second additive comprises fluoroethylene carbonate and 1,3-propane sultone. In some embodiments, the second additive comprises 1, 2-difluoroethylene carbonate and 1,3-propane sultone.

In some embodiments, a mass ratio of the fluoroethylene carbonate or 1,2-difluoroethylene carbonate to the 1,3-propane sultone is (0.1-50):1, and optionally (0.1-30):1, (0.1-20):1, (0.1-10):1, (0.1-5):1, (0.1-3):1, (0.1-1):1 or (0.1-0.5):1.

The above-mentioned fluorocarbonate compound and sulphonate compound both may form an inorganic SEI film at the interface between the electrolyte and the negative electrode plate, and the second additive may be used alone or the additive containing two different materials may be used synergistically, effectively reducing the side reactions occurring due to the contact between the electrolyte and the positive and negative electrode plates, reducing gas generation, and prolonging the service life of the secondary battery.

In some embodiments, based on the total mass of the electrolyte, the mass percent W of the first additive and the mass percent A of the second additive satisfy: 0.045%≤W+A≤15%, optionally 0.1%≤W+A≤11%, 0.1%≤W+A≤10%, 0.1%≤W+A≤8%, 0.1%≤W+A≤5%, 0.1%≤W+A≤1.5%, 0.5%≤W+A≤11%, 0.5%≤W+A≤5%, 0.5%≤W+A≤2%, 0.05%≤W+A≤1% or 0.05%≤W+A≤2%.

Herein, "W+A" refers to the sum of the mass percentage of W (%) and the mass percentage of A (%).

In some embodiments, W+A is optionally equal to 0.05%, 0.15%, 0.6%, 1.3%, 1.5%, 2%, 4%, 5%, 6%, 7%, 8%, 10%, 13%, 15%, or a value in a range consisting of any two of the above.

The introduction of too much of the first additive and the second additive into the electrolyte may affect the thickness of the SEI film and the viscosity of the electrolyte, thereby reducing the fast charge and power performances of the battery. The mass percentage W of the first additive and the mess percentage A of the second additive are controlled to satisfy the above relationship, which can not onlyform a sufficient amount of inorganic SEI film at the interface between the electrolyte and the negative electrode plate to reduce gas generation and prolong the service life of the battery, and can also reduce the impact of the introduction of the first additive and the second additive on the electrolyte, e.g., on the fast charge and power performances of the secondary battery, thereby balancing the service life and the electrical performance of the secondary battery.

In some embodiments, based on the total mass of the electrolyte, the mass percentage A of the second additive is 0.05% to 10%, and optionally 0.5% to 7%, 0.1% to 10%, 0.2% to 10%, 0.5% to 10%, 0.1% to 7%, 0.1% to 6.5%, 0.5% to 6.5%, and 0.2% to 6.5%.

In some embodiments, based on the total mass of the electrolyte, the mass percentage A of the second additive is optionally 0.1%, 0.5%, 1%, 1.5%, 2%, 2.5%, 3%, 3.5%, 4%, 4.5%, 5%, 5.5%, 6%, 6.5%, 7%, or a value in a range consisting of any two of the above.

The mass percentage of the second additive is controlled within an appropriate range, which can not only reduce interfacial side reactions of the positive and negative electrodes and further prolong the service life of the secondary battery, but also reduce the impact of the introduction of the second additive on the fast charge and power performances of the secondary battery, thereby balancing the service life and the electrical performance of the secondary battery.

In some embodiments, the cell assembly comprises a positive electrode current collector and a positive electrode film layer located on at least one side of the positive electrode current collector and comprising at least a positive electrode active material, and the positive electrode current collector has a thickness of 4 µm to 14 µm, and optionally 5 µm to 13 µm.

In some embodiments, the thickness of positive electrode current collector is optionally 4 µm, 5 µm, 6 µm, 7 µm, 8 µm, 9 µm, 10 µm, 11 µm, 12 µm, 13 µm, 14 µm, or a value in a range consisting of any two of the above.

In some embodiments, the secondary battery comprises a negative electrode current collector, and the negative electrode current collector has a thickness of 3 µm to 10 µm, and optionally 4 µm to 8 µm.

In some embodiments, the thickness of the negative electrode current collector is optionally 3 µm, 4 µm, 5 µm, 6 µm, 7 µm, 8 µm, 9 µm, 10 µm, or a value in a range consisting of any two of the above.

When the thickness of the positive electrode current collector and/or the negative electrode current collector is greater than the above range, the gas space in the battery case is reduced and the service life of the secondary battery is affected. When the thickness is smaller than the above range, the mechanical strength of the current collector and the electron conduction are affected. The thickness of the positive electrode current collector and/or the negative electrode current collector is controlled within an appropriate range, which can not only meet the requirements of mechanical strength and the requirements of electron conduction during charging and discharging, but also release some space to accommodate more positive electrode active material/negative electrode active material, thereby improving the energy density of the secondary battery, or release some space to accommodate gas to reduce the internal pressure of the battery case or maintain the internal pressure basically stable, thereby helping to prolong the service life of the secondary battery and improve the safety thereof.

In some embodiments, the secondary battery has an injection coefficient of 1 g/Ah to 3 g/Ah, and optionally 1.5 g/Ah to 3 g/Ah, and1.5 g/Ah to 2.5 g/Ah.

In some embodiments, the injection coefficient of the secondary battery is optionally 1 g/Ah, 1.2 g/Ah, 1.4 g/Ah, 1.5 g/Ah, 1.6 g/Ah, 1.8 g/Ah, 2 g/Ah, 2.2 g/Ah, 2.4 g/Ah, 2.5 g/Ah, 2.6 g/Ah, 2.8 g/Ah, 3 g/Ah, or a value in a range consisting of any two of the above.

In the present application, the term "injection coefficient" refers to the ratio of the mass (g) of the electrolyte injected into the secondary battery to the capacity (Ah) of the secondary battery. The capacity may be a designed capacity of the secondary battery.

The injection coefficient of the secondary battery is controlled within an appropriate range, which can not only provide enough electrolyte to meet the needs of the secondary battery, but also release some spaceto accommodate more positive electrode active material/negative electrode active material, thereby improving the energy density of the secondary battery, or release some space to accommodate gas generated by side reactions to reduce the internal pressure of the battery case, thereby prolonging the service life of the secondary battery and improving the safety thereof.

In some embodiments, the electrolyte contains a solvent, the solvent comprises one or more of a carboxylate solvent, a cyclic carbonate solvent, and a linear carbonate solvent.

In some embodiments, the solvent comprises a carboxylate solvent. In some embodiments, the solvent comprises a cyclic carbonate solvent. In some embodiments, the solvent comprises a linear carbonate solvent.

The carboxylate solvent, the cyclic carbonate solvent or the linear carbonate solvent can be used in combination with the first additive and/or the second additive to allow the secondary battery to have both excellent service life and energy density.

In some embodiments, the solvent comprises at least two of a carboxylate solvent, a cyclic carbonate solvent, and a linear carbonate solvent.

In some embodiments, based on the total mass of the solvent, the cyclic carbonate solvent of the solvent has a mass percentage X of 2% to 35% / 10% to 35%, 15% to 35%, or 20% to 35%.

In some embodiments, based on the total mass of the solvent, the linear carbonate solvent has a mass percentage Y of 0% to 80%, 20% to 80%, or 40% to 80%.

In some embodiments, based on the total mass of the solvent, the carboxylate solvent has a mass percentage Y of 0% to 80%, 20% to 80%, or 20% to 70%.

In some embodiments, based on the total mass of the solvent, among the solvent, the cyclic carbonate solvent has a mass percentage X of 2% to 35%, the linear carbonate solvent has a mass percentage Y of 0% to 80%, and the carboxylate solvent has a mass percentage of (100% - X - Y).

In some embodiments, based on the total mass of the solvent, the cyclic carbonate solvent has a mass percentage X of 20% to 35%, the linear carbonate solvent has a mass percentage Y of 0% to 75%, and the carboxylate solvent has a mass percentage of (100% - X - Y).

In some embodiments, the solvent comprises a carboxylate solvent and a cyclic carbonate solvent. Based on the total mass of the solvent, a mass ratio of the carboxylate solvent to the cyclic carbonate solvent is5:95 to 80:20, and optionally10:90 to 70:30. In some embodiments, the mass ratio of the carboxylate solvent to the cyclic carbonate solvent may be5:95, 10:90, 15:85, 20:80, 25:75, 30:70, 35:65, 40:60, 45:55, 50:50, 55:45, 60:40, 65:35, 70:30, 75:25 or 80:20.

In some embodiments, the solvent comprises a cyclic carbonate solvent and a linear carbonate solvent. Based on the total mass of the solvent, a mass ratio of the cyclic carbonate solvent to the linear carbonate solvent is5:95 to 65:35, and optionally10:90 to 70:30. In some embodiments, the mass ratio of the cyclic carbonate solvent to the linear carbonate solvent may be5:95, 10:90, 15:85, 20:80, 25:75, 30:70, 35:65, 40:60, 45:55, 50:50, 55:45, 60:40, or 65:35.

The mass ratio of different solvents is controlled within an appropriate range, which is conducive to lowering the viscosity of the electrolyte and improving the kinetic performance of the electrolyte, thereby further improving electrical properties of the secondary battery.

In some embodiments, the solvent comprises a carboxylate solvent, a cyclic carbonate solvent, and a linear carbonate solvent. Based on the total mass of the solvent, the cyclic carbonate solvent has a mass percentage X of 2% to 35%, the linear carbonate solvent has a mass percentage Y of 8% to 60%, and the carboxylate solvent has a mass percentage of (100% - X - Y). In some embodiments, based on the total mass of the solvent, the cyclic carbonate solvent has a mass percentage X of 20% to 30%, the linear carbonate solvent has a mass percentage Y of 50% to 60%, and the carboxylate solvent has a mass percentage of (100% - X - Y).

In some embodiments, the mass ratio of the carboxylate solvent to the cyclic carbonate solvent to the linear carbonate solvent is5:35:60 to 90:2:8.: 30:20:50 to 10:30:60, 5:35:60, 10:30:60, 15:25:60, 15:35:50, 20:35:45, 20:25:55, 25:15:60, 25:25:50, 25:20:55, 35:15:50, 40:5:55, 45:25:30, 50:35:15, 50:25:25, 55:20:25, 55:35:10, 60:20:20, 60:25:15, 65:25:10, 65:15:20, 70:15:15, 80:10:10, 85:5:10 or 90:2:8.

The electrical properties of the secondary battery can be improved as much as possible by using a combination of the carboxylate solvent, the cyclic carbonate solvent and the linear carbonate solvent, and by controlling the mass ratio of the carboxylate solvent to the cyclic carbonate solvent to the linear carbonate solvent.

In some embodiments, the carboxylate solvent comprises a structure represented by Formula I, 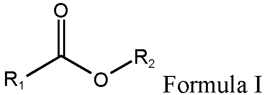 where R₁ and R₂ each independently comprise a C₁₋₁₀ alkyl group.

In some embodiments, R₁ and R₂ each independently comprise a C₁₋₄ alkyl group. In some embodiments, R₁ and R₂ each independently comprise a C₁₋₃ alkyl group. In some embodiments, R₁ and R₂ each independently comprise methyl and ethyl.

In some embodiments, the carboxylate solvent comprises one or more of methyl formate, methyl acetate, ethyl acetate, butyl acetate, methyl propionate, methyl butyrate, ethyl butyrate, propyl butyrate, butyl butyrate, isopropyl acetate, and isoamyl acetate.

In some embodiments, the cyclic carbonate solvent comprises one or more of ethylene carbonate and propylene carbonate.

In some embodiments, the linear carbonate solvent comprises at least one of dimethyl carbonate, diethyl carbonate, methyl propyl carbonate and ethyl methyl carbonate.

The above materials can be used in combination with the first additive and/or the second additive to make the secondary battery have excellent service life and energy density.

In some embodiments, the linear carbonate solvent comprises two of dimethyl carbonate, diethyl carbonate, methyl propyl carbonate and ethyl methyl carbonate.

In some embodiments, the linear carbonate solvent comprises dimethyl carbonate and diethyl carbonate. In some embodiments, the linear carbonate solvent comprises dimethyl carbonate and methyl propyl carbonate. In some embodiments, the linear carbonate solvent comprises dimethyl carbonate and ethyl methyl carbonate. In some embodiments, the linear carbonate solvent comprises diethyl carbonate and methyl propyl carbonate. In some embodiments, the linear carbonate solvent comprises diethyl carbonate and ethyl methyl carbonate. In some embodiments, the linear carbonate solvent comprises methyl propyl carbonate and ethyl methyl carbonate.

In any embodiment, the linear carbonate solvent comprises dimethyl carbonate and ethyl methyl carbonate, and a mass ratio of the two types of linear carbonate solvents is 5:90 to 70:10, and optionally 10:80 to 60:10. In some embodiments, the mass ratio of the two types of linear carbonate solvents may be5:90, 10:80, 15:80, 10:80, 25:65, 30:60, 35:60, 40:50, 45:45, 50:30, 55:20, 60:10 or 70:10.

The solvent further comprises two types of linear carbonate solvents and/or two types of linear carbonate solvents is controlled, which is conducive to further improving properties of the electrolyte, thereby improving properties of the secondary battery.

In some embodiments, the electrolyte further contains a lithium salt, the lithium salt comprising one or more of LiFSI, LiPF₆, LiBF₄, LiTFSI, LiClO₄, LiAsF₆, LiBOB, LiDFOB, and LiDFOP.

In some embodiments, the electrolyte further contains a sodium salt, the sodium salt comprising one or more of NaFSI, NaPF₆, NaBF₄, NaTFSI, NaClO₄, and NaAsF₆.

### [Positive electrode plate]

A positive electrode plate comprises a positive electrode current collector and a positive electrode film layer arranged on at least one surface of the positive electrode current collector, where the positive electrode film layer comprises a positive electrode active material.

As an example, the positive electrode current collector has two opposite surfaces in its own thickness direction, and the positive electrode film layer is arranged on either or both of the opposite surfaces of the positive electrode current collector.

In some embodiments, the positive electrode current collector can be a metal foil or a composite current collector. For example, an aluminum foil can be used as the metal foil. The composite current collector may comprise a polymer material substrate layer and a metal layer formed on at least one surface of the polymer material substrate layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene (PP), polyethylene terephthalate (PET), polybutylene terephthalate (PBT), polystyrene (PS), or polyethylene (PE)).

In some embodiments, the positive electrode active material may be a positive electrode active material for batteries well known in the art. As an example, the positive electrode active material may comprise at least one of the following materials: a lithium-comprising phosphate of olivine structure, a lithium transition metal oxide, and a respective modified compound thereof. However, the present application is not limited to these materials, and other conventional materials useful as positive electrode active materials for batteries can also be used. These positive electrode active materials may be used alone or in combination of two or more thereof. Examples of lithium transition metal oxides may comprise, but are not limited to, at least one of a lithium-cobalt oxide (e.g., LiCoO₂), a lithium-nickel oxide (e.g., LiNiO₂), a lithium-manganese oxide (e.g., LiMnO₂ or LiMn₂O₄), a lithium-nickel-cobalt oxide, a lithium-manganese-cobalt oxide, a lithium-nickel-manganese oxide, a lithium-nickel-cobalt-manganese oxide (e.g., LiNi_{1/3}Co_{1/3}Mn_{1/3}O₂ (also abbreviated as NCM333), LiNi_{0.5}Co_{0.2}Mn_{0.3}O₂ (also abbreviated as NCM523), LiNi_{0.5}Co_{0.25}Mn_{0.25}O₂ (also abbreviated as NCM211), LiNi_{0.6}Co_{0.2}Mn_{0.2}O₂ (also abbreviated as NCM622), LiNi_{0.8}Co_{0.1}Mn_{0.1}O₂ (also abbreviated as NCM811), a lithium-nickel-cobalt-aluminum oxide (e.g., LiNi_{0.85}Co_{0.15}Al_{0.05}O₂), a modified compound thereof, and the like. Examples of lithium-containing phosphates of olivine structure may comprise, but are not limited to, at least one of lithium iron phosphate (e.g., LiFePO₄ (also abbreviated as LFP)), lithium iron phosphate and carbon composites, lithium manganese phosphate (e.g., LiMnPO₄), lithium manganese phosphate and carbon composites, lithium iron manganese phosphate, and lithium iron manganese phosphate and carbon composites.

In some embodiments, the positive electrode film layer further optionally comprises a binder. As an example, the binder may comprise at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin.

In some embodiments, the positive electrode film layer further optionally comprises a conductive agent. As an example, the conductive agent may comprise at least one of superconducting carbon, acetylene black, carbon black, Ketjen black, carbon dot, carbon nanotube, graphene, and carbon nanofiber.

In some embodiments, the positive electrode plate may be prepared by: dispersing the above components, such as the positive electrode active material, the conductive agent, the binder, and any other component, for preparing the positive electrode plate in a solvent (such as N-methyl pyrrolidone) to form a positive electrode slurry; and coating the positive electrode slurry on the positive electrode current collector, drying, and cold pressing, to provide the positive electrode plate.

### [Negative electrode plate]

The negative electrode plate comprises a negative electrode current collector and a negative electrode film layer arranged on at least one surface of the negative electrode current collector.

As an example, the negative electrode current collector has two surfaces opposite in its own thickness direction, and the negative electrode film layer is arranged on either one or both of the two opposite surfaces of the negative electrode current collector.

In some embodiments, the negative electrode current collector may be a metal foil or a composite current collector. For example, a copper foil can be used as the metal foil. The composite current collector may comprise a high molecular material substrate layer and a metal layer formed on at least one surface of the high molecular material substrate. The composite current collector can be formed by forming a metal material (copper, copper alloy, nickel, nickel alloy, titanium, titanium alloy, silver, and silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, a negative electrode active material for the battery well known in the art may be used as the negative electrode active material. As an example, the negative active material may comprise at least one of the following materials: artificial graphite, natural graphite, soft carbon, hard carbon, silicon-based material, tin-based material, and lithium titanate, etc. The silicon-based material may be selected from at least one of elemental silicon, silicon-oxygen complex, silicon-carbon complex, silicon-nitrogen complex, and silicon alloy. The tin-based material may be selected from at least one of elemental tin, a tin-oxygen compound, and a tin alloy. However, the present application is not limited to these materials, and other conventional materials useful as negative electrode active materials for batteries can also be used. These negative electrode active materials may be used alone or in a combination of two or more thereof.

In some embodiments, the negative electrode film layer further optionally comprises a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally comprises a conductive agent. The conductive agent may be selected from at least one of superconducting carbon, acetylene black, carbon black, Ketjen black, carbon dot, carbon nanotube, graphene, and carbon nanofiber.

In some embodiments, the negative electrode film layer further optionally comprises other adjuvants, for example, a thickener (such as sodium carboxymethyl cellulose (CMC-Na)).

In some embodiments, the negative electrode plate may be prepared by: dispersing the above components, such as the negative electrode active material, the conductive agent, the binder and any other component, for preparing the negative electrode plate in a solvent (such as deionized water) to form a negative electrode slurry; and coating the negative electrode slurry on the negative electrode current collector, and performing drying and cold pressing processes to obtain the negative electrode plate.

### [Separator]

In some embodiments, the secondary battery further comprises a separator. Any well-known separator having good chemical stability, mechanical stability, and a porous structure may be selected.

In some embodiments, the material of the separator can be selected from at least one of glass fiber, non-woven cloth, polyethylene, polypropylene, and polyvinylidene fluoride. The separator may be a single-layer film or a multi-layer composite film. When the separator is a multi-layer composite film, the material in each layer may be same or different.

In some embodiments, the positive electrode plate, the negative electrode plate, and the separator may be made into a cell assembly through winding or lamination.

In some embodiments, the secondary battery comprises a positive electrode plate, a negative electrode plate, a separator, and an electrolyte in some embodiments.

In some embodiments, the secondary battery comprises at least one or more of a lithium secondary battery, a sodium secondary battery and a potassium secondary battery.

In some embodiments, the secondary battery may comprise an outer package. The outer package can be used for encapsulating the above-mentioned cell assembly and electrolyte.

In some embodiments, the outer package of the secondary battery may be a hard case, such as a hard plastic case, an aluminum case, a steel case, and the like. The outer package of the secondary battery may also be a soft pack, such as a bag-type soft pack. The material of the soft pack may be a plastic, and examples of the plastic may comprise polypropylene, polybutylene terephthalate, polybutylene succinate, and the like.

The shape of the secondary battery may be a cylinder, a square, or any other shape. For example, Fig. 1 shows a secondary battery 5 with a square structure as an example.

In some embodiments, referring to Fig. 2, the outer package may comprise a case 51 and a cover plate 53. The case 51 may comprise a bottom plate and a side plate connected to the bottom plate, which enclose to form an accommodating cavity. The case 51 has an opening that communicates with the accommodating cavity, and the cover plate 53 may cover the opening to close the accommodating cavity. The positive electrode plate, the negative electrode plate, and the separator made into a cell assembly 52 through winding or lamination. The cell assembly 52 is encapsulated within the accommodating cavity. The cell assembly 52 is impregnated with the electrolyte. The number of cell assemblies 52 included in the secondary battery 5 may be one or more, and may be selected by those skilled in the art according to specific actual requirements.

In some embodiments, the secondary batteries may be assembled into a battery module, the number of secondary batteries included in the battery module may be one or more, and the specific number may be selected by those skilled in the art according to the application and capacity of the battery module.

Fig. 3 shows a battery module 4 as an example. Referring to Fig. 3, in the battery module 4, a plurality of secondary batteries 5 can be sequentially arranged along the length direction of the battery module 4. Of course, any other arrangements are also possible. The plurality of secondary batteries 5 may further be fixed by fasteners.

Optionally, the battery module 4 may further comprise a shell having an accommodating space, in which the plurality of secondary batteries 5 is accommodated.

In some embodiments, the above battery modules may be further assembled into a battery pack, the number of battery modules included in the battery pack may be one or more, and the specific number may be selected by those skilled in the art based on the application and capacity of the battery pack.

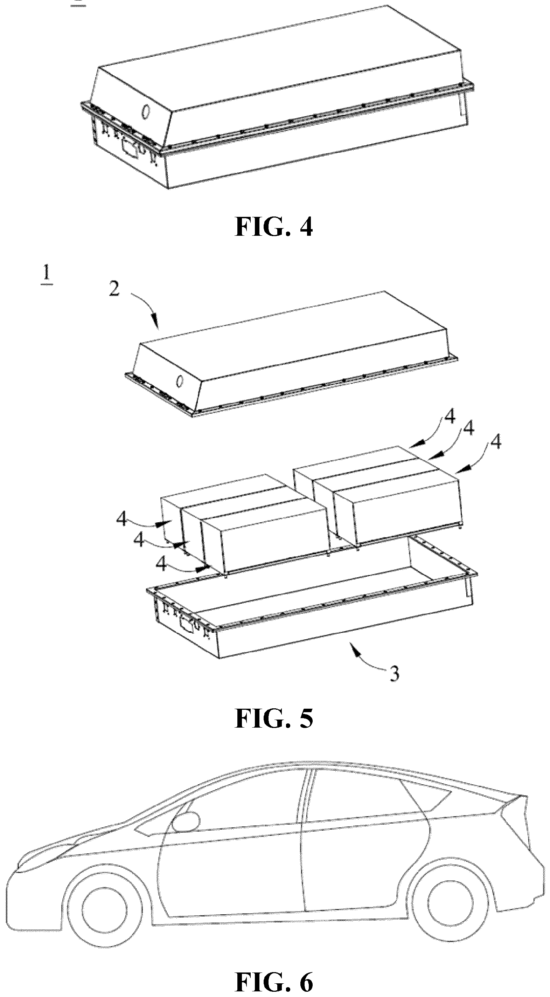

Figs. 4 and 5 show a battery pack 1 as an example. Referring to Figs. 4 and 5, the battery pack 1 may comprise a battery box and a plurality of battery modules 4 provided in the battery box. The battery box comprises an upper box 2 and a lower box 3, where the upper box 2 can cover the lower box 3 and forms an enclosed space for accommodating the battery module 4. The plurality of battery modules 4 may be arranged in the battery box in any manner.

In addition, the present application further provides an electrical apparatus, comprising at least one of the secondary battery, the battery module, or the battery pack provided in the present application. The secondary battery, the battery module, or the battery pack can be used as a power source for the electrical apparatus, and can also be used as an energy storage unit for the electrical apparatus. The electrical apparatus may comprise, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, an energy storage system, etc.

For the electrical apparatus, the secondary battery, the battery module, or the battery pack may be selected according to its use requirements.

Fig. 6 is an example of an electrical apparatus. The electrical apparatus is an all-electric vehicle, a hybrid electric vehicle, a plug-in hybrid electric vehicle, or the like. In order to meet the requirements of the electrical apparatus for high power and high energy density of a secondary battery, a battery pack or a battery module may be used.

As another example, the apparatus may be a mobile phone, a tablet, a laptop, etc. The apparatus is generally required to be light and thin, and may use a secondary battery as a power source.

### EXAMPLES

Examples of the present application will be described below. The examples described below are exemplary and only used to explain the present application, and are not to be construed as limiting the present application. Where specific techniques or conditions are not specified in the examples, the techniques or conditions described in the literature of the art or the product specifications are followed. Where manufacturers are not specified, the reagents or instruments used are conventional products and are commercially available.

### I. Preparation method

### Example 1

### 1) Electrolyte

In an argon atmosphere glove box (H₂O<0.1 ppm, O₂<0.1 ppm), ethylene carbonate and ethyl methyl carbonate was mixed (at a mass ratio of 3:7), a lithium salt lithium hexafluorophosphate, having a mass percentage of 12% in an electrolyte, was added to a mixed solvent and stirred well, and then 4,4'-bis(ethylene sulfate) accounting for 1% of the total mass of the electrolyte was added, followed by mixing uniformly, to obtain the electrolyte.

### 2) Preparation of positive electrode plate

1wt% polyvinylidene fluoride as a binder was fully dissolved in N-methylpyrrolidone, and then 1wt% carbon black as a conductive agent and a 98wt% ternary positive electrode active material Li(NiCoMn)O₂ were added, followed by stirring and mixing uniformly, to obtain a positive electrode slurry. The slurry was evenly applied on the surface of the current collector aluminum foil to prepare the positive electrode film layer which was then transferred to a vacuum drying oven for full drying. The dried electrode plate was rolled and punched to obtain a positive electrode plate.

### 3) Preparation of negative electrode plate

A negative electrode active material artificial graphite, carbon black as a conductive agent, carboxymethyl cellulose (CMC) as a thickener, and styrene butadiene rubber (SBR) as a binder were mixed at a weight ratio of 96:2:1:1 and dissolved in deionized water to prepare a negative electrode slurry, the negative electrode slurry was obtained under action of a vacuum mixer, and then was applied on a surface of a copper foil. Finally, it was transferred into a vacuum drying oven for full drying, followed by slitting and die-cutting, to obtain a negative electrode plate.

### 4) Separator

A polypropylene film was used as the separator.

### 5) Preparation of battery

The positive electrode plate, the separator and the negative electrode plate were wound or stacked well in sequence, the separator was positioned between the positive electrode plate and the negative electrode plate and functioned to separate, a tab was welded to a bare cell, the bare cell was mounted into an aluminum case, baked at 80°C to remove water, and then the electrolyte was injected and encapsulated to obtain an uncharged battery. The uncharged battery was then subjected to processes such as standing, hot and cold pressing, formation, shaping, and capacity testing. Here, the internal volume of the accommodating capacity was 1011.3 ml, the volume of the cell assembly was 751 ml, the volume of the electrolyte was 195.2 ml, and the capacity of the secondary battery was 130.1 Ah, and a lithium secondary battery product of Example 1 was obtained. The injection coefficient of the electrolyte was 1.8 g/Ah, and the residual space R of the lithium secondary battery was 0.5 mL/Ah.

### Examples 2-38

Methods for preparing a battery in Examples 2 to 38 are basically similar to that in Example 1, except that the electrolyte preparation parameters are adjusted. The specific parameters are shown in Table 1.

Here, in Example 6, the internal volume of the accommodating capacity was kept constant, the volume of the cell assembly was adjusted to 792.6 ml, the volume of the electrolyte was adjusted to 211.7 ml, and the capacity of the secondary battery was adjusted to 141.1 Ah, to obtain a secondary battery with a residual space R of 0.05 mL/Ah.

In Example 7, the internal volume of the accommodating capacity was kept constant, the volume of the cell assembly was adjusted to 680.6 ml, the volume of the electrolyte was adjusted to 165.3 ml, and the capacity of the secondary battery was adjusted to 110.2 Ah, to obtain a secondary battery with a residual space R of 1.5 mL/Ah.

In Example 9, the internal volume of the accommodating capacity was kept constant, the volume of the cell assembly was adjusted to 787 ml, the volume of the electrolyte was adjusted to 210.3 ml, and the capacity of the secondary battery was adjusted to 140.2 Ah, to obtain a secondary battery with a residual space R of 0.1 mL/Ah.

In Example 10, the internal volume of the accommodating capacity was kept constant, the volume of the cell assembly was adjusted to 691.2 ml, the volume of the electrolyte was adjusted to 171.5 ml, and the capacity of the secondary battery was adjusted to 114.3 Ah, to obtain a secondary battery with a residual space R of 1.3 mL/Ah.

In Example 11, the internal volume of the accommodating capacity was kept constant, the volume of the cell assembly was adjusted to 680.6 ml, the volume of the electrolyte was adjusted to 165.3 ml, and the capacity of the secondary battery was adjusted to 110.2 Ah, to obtain a secondary battery with a residual space R of 1.5 mL/Ah.

In Example 12, the internal volume of the accommodating capacity was kept constant, the volume of the cell assembly was adjusted to 614 ml, the volume of the electrolyte was adjusted to 132.3 ml, and the capacity of the secondary battery was adjusted to 88.2 Ah, to obtain a secondary battery with a residual space R of 3 mL/Ah.

In Example 29, the internal volume of the accommodating capacity and the residual space were kept constant, the volume of the cell assembly was adjusted to 835.2 ml, the volume of the electrolyte was adjusted to 110 ml, and the capacity of the secondary battery was adjusted to 132Ah, to obtain a secondary battery with an injection coefficient of 1 g/Ah.

In Example 30, the internal volume of the accommodating capacity and the residual space were kept constant, the volume of the cell assembly was adjusted to 774.8 ml, the volume of the electrolyte was adjusted to 169 ml, and the capacity of the secondary battery was adjusted to 135.2Ah, to obtain a secondary battery with an injection coefficient of 1.5 g/Ah.

In Example 31, the internal volume of the accommodating capacity and the residual space were kept constant, the volume of the cell assembly was adjusted to 762 ml, the volume of the electrolyte was adjusted to 181.3 ml, and the capacity of the secondary battery was adjusted to 136Ah, to obtain a secondary battery with an injection coefficient of 1.6 g/Ah.

In Example 32, the internal volume of the accommodating capacity and the residual space were kept constant, the volume of the cell assembly was adjusted to 658.6 ml, the volume of the electrolyte was adjusted to 279.8 ml, and the capacity of the secondary battery was adjusted to 146Ah, to obtain a secondary battery with an injection coefficient of 2.3 g/Ah.

In Example 33, the internal volume of the accommodating capacity and the residual space were kept constant, the volume of the cell assembly was adjusted to 628.9 ml, the volume of the electrolyte was adjusted to 308.8 ml, and the capacity of the secondary battery was adjusted to 148.2Ah, to obtain a secondary battery with an injection coefficient of 2.5 g/Ah.

In Example 34, the internal volume of the accommodating capacity and the residual space were kept constant, the volume of the cell assembly was adjusted to 551 ml, the volume of the electrolyte was adjusted to 383.5 ml, and the capacity of the secondary battery was adjusted to 153.4Ah, to obtain a secondary battery with an injection coefficient of 3 g/Ah.

### Comparative Example 1

A method for preparing a battery in Comparative Example 1 is basically similar to that in Example 1, except that the electrolyte does not contain the first additive and the second additive. The specific parameters are shown in Table 1.

### Comparative Example 2

A method for preparing a battery in Comparative Example 2 is basically similar to that In Example 1, where the internal volume of the accommodating capacity was kept constant, the volume of the cell assembly was adjusted to 795 ml, the volume of the electrolyte was adjusted to 213.5 ml, and the capacity of the secondary battery was adjusted to 142.3 Ah, the R value of the secondary battery was adjusted to 0.02 mL/Ah, and accordingly W/R was equal to 50. Specific parameters are shown in Fig. 1.

### Comparative Example 3

A method for preparing a battery in Comparative Example 3 is basically similar to that in Example 1, except that W of the first additive in the secondary battery was adjusted to 0.01% such that W/R was equal to 0.02. The adjustment method is similar to those in Examples 7 to 12, and the specific parameters are shown in Table 1.

### Comparative Example 4

A method for preparing a battery in Comparative Example 4 is basically similar to that in Comparative Example 1, except that the second additive is introduced into the electrolyte. The specific parameters are shown in Table 1.

### Comparative Example 5

A method for preparing a battery in Comparative Example 5 is basically similar to that in Comparative Example 2, except that the second additive is introduced into the electrolyte. The specific parameters are shown in Table 1.

### Comparative Example 6

A method for preparing a battery in Comparative Example 6 is basically similar to that in Comparative Example 3, except that the second additive is introduced into the electrolyte. The specific parameters are shown in Table 1.

### II. Performance Test

### 1. Battery performance test

### 1) Direct-current resistance (DCR) test

At -25°C, a single cell was adjusted into a charge state of 50% SOC and subjected to standing for 30 min, a battery voltage at this time was recorded as U1(V); and then, the cell was discharged at 0.36C for 10s, a battery voltage at this time was recorded as U2(V), and correspondingly, a battery discharge current I(mA) was 0.36 x battery design capacity (mAh). DCR (mΩ)=(U1-U2)/I.

### 2) Energy density test

At 25°C, a battery was charged to the designed upper limit voltage with constant current and voltage at 0.33C, with a cutoff current of 0.05C, and then was discharged to the designed lower limit voltage at 0.33C after standing for 30 min, followed by recording discharged energy as P(Wh) and weight of the cell as m(kg), to obtain the energy density (Wh/kg) = P/m.

### 3) High-temperature gas generation test

A high-temperature gas generation test process is as follows: the prepared battery was charged to 100% SOC at a rate of 0.1 C and stored at 60°C, a barometer was used for monitoring an internal pressure of the battery online, and the number of storage days at 60°C was recorded under a cut-off pressure of 0.35 MPa.

### 4) Cycling performance test

A cycling performance test process is as follows: the prepared battery was charged to 4.25 V with a constant current at 1 C at 45°C, and was charged with a constant voltage of 4.25 V until the current dropped to 0.05 C, and then discharged to 2.5 V with a constant current at 1 C after 5 min of standing, and this process was a first charge/discharge cycle of the battery, where the discharge capacity in this time was recorded as a discharge capacity (C1) of the battery in the first cycle; the above steps were repeated for the same battery to obtain a process capacity (Cn) of the battery after nth cycle, and the capacity retention rate after the nth cycle = Cn/C1×100%. The number of cycles where the cycling capacity retention rate is 80% was recorded. The testing processes of the comparative examples and the other examples are the same as above.

### III. Analysis on test results of respective example and comparative example

Batteries of the examples and comparative examples were each prepared according to the above method, and measured for various performance parameters. The results are shown in Table 1 and Table 2 below.

**Table 1**

| No. | R (mL/Ah) | Electrolyte | | | | | |
|---|---|---|---|---|---|---|---|
| | | First additive mass percentage W/% | W/R (%) | Second additive | | W+A (%) | Solvent |
| | | | | Material | Mass percentage A/% | | |
| Example 1 | 0.5 | 1 | 2.00 | / | 0 | 1 | Ethylene carbonate + Ethyl methyl carbonate (Mass ratio of 3:7) |
| Example 2 | 0.5 | 0.05 | 0.10 | / | 0 | 0.05 | Ethylene carbonate + Ethyl methyl carbonate (Mass ratio of 3:7) |
| Example 3 | 0.5 | 0.1 | 0.20 | / | 0 | 0.1 | Ethylene carbonate + Ethyl methyl carbonate (Mass ratio of 3:7) |
| Example 4 | 0.5 | 1.8 | 3.60 | / | 0 | 1.8 | Ethylene carbonate + Ethyl methyl carbonate (Mass ratio of 3:7) |
| Example 5 | 0.5 | 2 | 4.00 | / | 0 | 2 | Ethylene carbonate + Ethyl methyl carbonate (Mass ratio of 3:7) |
| Example 6 | 0.05 | 2 | 40.00 | / | 0 | 2 | Ethylene carbonate + Ethyl methyl carbonate (Mass ratio of 3:7) |
| Example 7 | 1.5 | 0.045 | 0.03 | / | 0 | 0.045 | Ethylene carbonate + Ethyl methyl carbonate (Mass ratio of 3:7) |
| Example 8 | 0.05 | 1 | 20.00 | / | 0 | 1 | Ethylene carbonate + Ethyl methyl carbonate (Mass ratio of 3:7) |
| Example 9 | 0.1 | 1 | 10.00 | / | 0 | 1 | Ethylene carbonate + Ethyl methyl carbonate (Mass ratio of 3:7) |
| Example 10 | 1.3 | 1 | 0.77 | / | 0 | 1 | Ethylene carbonate + Ethyl methyl carbonate (Mass ratio of 3:7) |
| Example 11 | 1.5 | 1 | 0.67 | / | 0 | 1 | Ethylene carbonate + Ethyl methyl carbonate (Mass ratio of 3:7) |
| Example 12 | 3 | 1 | 0.33 | / | 0 | 1 | Ethylene carbonate + Ethyl methyl carbonate (Mass ratio of 1:3) |
| Example 13 | 0.5 | 1 | 2.00 | Fluoroethylene carbonate | 3 | 4 | Ethylene carbonate + Ethyl methyl carbonate (Mass ratio of 3:7) |
| Example 14 | 0.5 | 1 | 2.00 | Fluoroethylene carbonate | 0.1 | 1.1 | Ethylene carbonate + Ethyl methyl carbonate (Mass ratio of 3:7) |
| Example 15 | 0.5 | 1 | 2.00 | Fluoroethylene carbonate | 0.5 | 1.5 | Ethylene carbonate + Ethyl methyl carbonate (Mass ratio of 3:7) |
| Example 16 | 0.5 | 1 | 2.00 | Fluoroethylene carbonate | 6.5 | 75 | Ethylene carbonate + Ethyl methyl carbonate (Mass ratio of 3:7) |
| Example 17 | 0.5 | 1 | 2.00 | Fluoroethylene carbonate | 7 | 8 | Ethylene carbonate + Ethyl methyl carbonate (Mass ratio of 3:7) |
| Example 18 | 0.5 | 1 | 2.00 | Fluoroethylene carbonate | 0.05 | 1.05 | Ethylene carbonate + Ethyl methyl carbonate (Mass ratio of 3:7) |
| Example 19 | 0.5 | 1 | 2.00 | Fluoroethylene carbonate | 10 | 11 | Ethylene carbonate + Ethyl methyl carbonate (Mass ratio of 3:7) |
| Example 20 | 0.5 | 0.05 | 0.10 | Fluoroethylene carbonate | 0.1 | 0.15 | Ethylene carbonate + Ethyl methyl carbonate (Mass ratio of 3:7) |
| Example 21 | 0.5 | 0.5 | 1.00 | Fluoroethylene carbonate | 0.2 | 0.7 | Ethylene carbonate + Ethyl methyl carbonate (Mass ratio of 3:7) |
| Example 22 | 0.5 | 1 | 2.00 | Fluoroethylene carbonate + 1, 3-propane sultone (Mass ratio of 1:3) | 3 | 4 | Ethylene carbonate + Ethyl methyl carbonate (Mass ratio of 3:7) |
| Example 23 | 0.5 | 1 | 2.00 | 1, 2-difluoroethylene carbonate + 1, 3-propane sultone (Mass ratio of 1:3) | 3 | 4 | Ethylene carbonate + Ethyl methyl carbonate (Mass ratio of 3:7) |
| Example 24 | 0.5 | 1 | 2.00 | Fluoroethylene carbonate | 3 | 4 | Ethylene carbonate + Dimethyl carbonate (Mass ratio of 3:7) |
| Example 25 | 0.5 | 1 | 2.00 | Fluoroethylene carbonate | 3 | 4 | Ethylene carbonate + Ethyl acetate (Mass ratio of 3:7) |
| Example 26 | 0.5 | 1 | 2.00 | Fluoroethylene carbonate | 3 | 4 | Ethylene carbonate + Methyl acetate (Mass ratio of 3:7) |
| Example 27 | 0.5 | 1 | 2.00 | Fluoroethylene carbonate | 3 | 4 | Ethylene carbonate + Dimethyl carbonate + Ethyl acetate (Mass ratio of 3:5:2) |
| Example 28 | 0.5 | 1 | 2.00 | Fluoroethylene carbonate | 3 | 4 | Ethylene carbonate + Ethyl methyl carbonate + Dimethyl carbonate + Ethyl acetate (Mass ratio of 2:2:4:2) |
| Example 29 | 0.5 | 1 | 2.00 | Fluoroethylene carbonate | 3 | 4 | Ethylene carbonate + Ethyl methyl carbonate (Mass ratio of 1:3) |
| Example 30 | 0.5 | 1 | 2.00 | Fluoroethylene carbonate | 3 | 4 | Ethylene carbonate + Ethyl methyl carbonate (Mass ratio of 1:3) |
| Example 31 | 0.5 | 1 | 2.00 | Fluoroethylene carbonate | 3 | 4 | Ethylene carbonate + Ethyl methyl carbonate (Mass ratio of 1:3) |
| Example 32 | 0.5 | 1 | 2.00 | Fluoroethylene carbonate | 3 | 4 | Ethylene carbonate + Ethyl methyl carbonate (Mass ratio of 1:3) |
| Example 33 | 0.5 | 1 | 2.00 | Fluoroethylene carbonate | 3 | 4 | Ethylene carbonate + Ethyl methyl carbonate (Mass ratio of 1:3) |
| Example 34 | 0.5 | 1 | 2.00 | Fluoroethylene carbonate | 3 | 4 | Ethylene carbonate + Ethyl methyl carbonate (Mass ratio of 1:3) |
| Example 35 | 0.5 | 1 | 2.00 | / | 0 | 1 | Ethylene carbonate + Ethyl methyl carbonate (Mass ratio of 3:7) |
| Example 36 | 0.5 | 1 | 2.00 | / | 0 | 1 | Ethylene carbonate + Ethyl methyl carbonate (Mass ratio of 3:7) |
| Example 37 | 0.5 | 1 | 2.00 | / | 0 | 1 | Ethylene carbonate + Ethyl methyl carbonate (Mass ratio of 3:7) |
| Example 38 | 0.5 | 1 | 2.00 | / | 0 | 1 | Ethylene carbonate + Ethyl methyl carbonate (Mass ratio of 3:7) |
| Comparative Example 1 | 0.5 | 0 | / | / | 0 | 0 | Ethylene carbonate + Ethyl methyl carbonate (Mass ratio of 1:3) |
| Comparative Example 2 | 0.02 | 1 | 50.00 | / | 0 | 1 | Ethylene carbonate + Ethyl methyl carbonate (Mass ratio of 1:3) |
| Comparative Example 3 | 0.5 | 0.01 | 0.02 | / | 0 | 0.01 | Ethylene carbonate + Ethyl methyl carbonate (Mass ratio of 1:3) |
| Comparative Example 4 | 0.5 | 0 | / | Fluoroethylene carbonate | 3 | 3 | Ethylene carbonate + Ethyl methyl carbonate (Mass ratio of 1:3) |
| Comparative Example 5 | 0.02 | 1 | 50.00 | Fluoroethylene carbonate | 3 | 4 | Ethylene carbonate + Ethyl methyl carbonate (Mass ratio of 1:3) |
| Comparative Example 6 | 0.5 | 0.01 | 0.02 | Fluoroethylene carbonate | 3 | 3.01 | Ethylene carbonate + Ethyl methyl carbonate (Mass ratio of 1:3) |

**Table 2**

| No. | Injection coefficient (g/Ah) | Negative electrode plate | Positive electrode plate | Direct current resistance (mΩ) | Energy density (Wh/kg) | High-temperature storage days/days | Number of cycles/cycles |
|---|---|---|---|---|---|---|---|
| | | Negative electrode current collector thickness /µm | Positive electrode current collector thickness /µm | | | | |
| Example 1 | 1.8 | 6 | 13 | 8.9 | 240 | 202 | 1512 |
| Example 2 | 1.8 | 6 | 13 | 8.6 | 240 | 150 | 1020 |
| Example 3 | 1.8 | 6 | 13 | 8.7 | 240 | 163 | 1118 |
| Example 4 | 1.8 | 6 | 13 | 9.3 | 240 | 245 | 1831 |
| Example 5 | 1.8 | 6 | 13 | 9.4 | 240 | 255 | 1850 |
| Example 6 | 1.8 | 6 | 13 | 9.4 | 255 | 1506 | 1112 |
| Example 7 | 1.8 | 6 | 13 | 8.8 | 207 | 250 | 1536 |
| Example 8 | 1.8 | 6 | 13 | 8.9 | 255 | 167 | 1222 |
| Example 9 | 1.8 | 6 | 13 | 8.9 | 253 | 171 | 1220 |
| Example 10 | 1.8 | 6 | 13 | 8.9 | 213 | 283 | 1735 |
| Example 11 | 1.8 | 6 | 13 | 8.9 | 207 | 306 | 1750 |
| Example 12 | 1.8 | 6 | 13 | 8.9 | 132 | 350 | 2448 |
| Example 13 | 1.8 | 6 | 13 | 10.2 | 240 | 233 | 1825 |
| Example 14 | 1.8 | 6 | 13 | 9 | 240 | 205 | 1550 |
| Example 15 | 1.8 | 6 | 13 | 9.2 | 240 | 210 | 1621 |
| Example 16 | 1.8 | 6 | 13 | 11.1 | 240 | 256 | 1950 |
| Example 17 | 1.8 | 6 | 13 | 11.2 | 240 | 258 | 2046 |
| Example 18 | 1.8 | 6 | 13 | 8.9 | 240 | 209 | 1520 |
| Example 19 | 1.8 | 6 | 13 | 12 | 240 | 232 | 1518 |
| Example 20 | 1.8 | 6 | 13 | 8.6 | 240 | 154 | 1050 |
| Example 21 | 1.8 | 6 | 13 | 8.7 | 240 | 182 | 1714 |
| Example 22 | 1.8 | 6 | 13 | 10.3 | 240 | 248 | 1816 |
| Example 23 | 1.8 | 6 | 13 | 10.5 | 240 | 232 | 1929 |
| Example 24 | 1.8 | 6 | 13 | 8.6 | 240 | 203 | 1822 |
| Example 25 | 1.8 | 6 | 13 | 7.1 | 240 | 181 | 1831 |
| Example 26 | 1.8 | 6 | 13 | 6.5 | 240 | 152 | 1828 |
| Example 27 | 1.8 | 6 | 13 | 7.9 | 240 | 194 | 1850 |
| Example 28 | 1.8 | 6 | 13 | 8 | 240 | 205 | 1880 |
| Example 29 | 1 | 6 | 13 | 10.4 | 260 | 203 | 1825 |
| Example 30 | 1.5 | 6 | 13 | 10.3 | 248 | 222 | 1526 |
| Example 31 | 1.6 | 6 | 13 | 10.3 | 245 | 219 | 1638 |
| Example 32 | 2.3 | 6 | 13 | 10 | 222 | 252 | 1931 |
| Example 33 | 2.5 | 6 | 13 | 9.8 | 215 | 261 | 1950 |
| Example 34 | 3 | 6 | 13 | 9.6 | 208 | 275 | 2021 |
| Example 35 | 1.8 | 3 | 13 | 8.9 | 245 | 202 | 1522 |
| Example 36 | 1.8 | 10 | 13 | 8.9 | 235 | 203 | 1534 |
| Example 37 | 1.8 | 6 | 4 | 8.9 | 250 | 201 | 1525 |
| Example 38 | 1.8 | 6 | 14 | 8.9 | 239 | 204 | 1526 |
| Comparative Example 1 | 1.8 | 6 | 13 | 8.7 | 240 | 62 | 827 |
| Comparative Example 2 | 1.8 | 6 | 13 | 8.9 | 258 | 51 | 645 |
| Comparative Example 3 | 1.8 | 6 | 13 | 8.6 | 240 | 102 | 808 |
| Comparative Example 4 | 1.8 | 6 | 13 | 8.6 | 240 | 82 | 619 |
| Comparative Example 5 | 1.8 | 6 | 13 | 8.9 | 258 | 52 | 812 |
| Comparative Example 6 | 1.8 | 6 | 13 | 8.6 | 240 | 106 | 923 |

According to the above results of Examples 1 to 38,when the ratio W/R of the mass percentage W of the sulphate compound to the residual space R is in the range of 0.03% to 40%,the prepared secondary battery has both good energy density and high-temperature storage days.

As can be seen from the comparison of Examples 1 to 12 with Comparative Example 1, and Examples 13 to 28 with Comparative Example 4, the electrolyte containing the sulphate compound is conducive to improving the high-temperature storage performance and cycling performance of the battery. As can be seen from the comparison of Examples 1 to 12 with Comparative Examples 2 to 3, and Examples 13 to 28 with Comparative Examples 5 to 6, when the ratio W/R of the mass percentage W to the residual space R of the sulphate compound is in the range of 0.03% to 40%, the battery has an improved energy density while the high-temperature storage performance and cycling performance of the battery are further improved. As can be seen from the comparison of Examples 1 to 5 and 7 to 12 with Example 6, when the ratio W/R of the mass percentage W of the sulphate compound to the residual space R is in the range of 0.03% to 20%, it is conducive to substantially improving the high-temperature storage performance of the battery.

As can be seen from Examples 1 to 5, based on the total mass meter of the electrolyte, by controlling the mass percentage W of the first additive to be in the range of 0.05% to 2%, the battery has a low DC resistance, a high energy density, and excellent high-temperature storage performance and cycling performance. As can be seen from the comparison of Examples 1, 3 to 5 with Example 2, the mass percentage W of the first additive is 0.1% to 2%, which is conducive to further improving the high-temperature storage performance and cycling performance of the battery.

As can be seen from the comparison of Examples 8 to 11 with Example 12, R is controlled to be 0.05 mL/Ah to 1.5 mL/Ah, which is conducive to improving the energy density of the battery. As can be seen from the comparison of Examples 9 to10 with Examples 8 and 11, R is controlled to be 0.1 mL/Ah to 1.3 mL/Ah, which achieves a balance of the energy density, the high-temperature storage performance and the cycling performance of the battery.

As can be seen from Examples 1 to 21, when the sum of the mass percentage W of the first additive and the mass percentage A of the second additive is controlled to be in the range of 0.045% to 11% based on the total mass of the electrolyte, the battery has a low DC resistance, a high energy density, and excellent high-temperature storage performance and cycling performance. As can be seen from the comparison of Examples 1 to 5 with Comparative Example 3, the addition of 4, 4'-bis(ethylene Sulfate) in the electrolyte is in the range of 0.045% to 2%, which helps to improve the number of high-temperature storage days of the secondary battery. As can be seen from the comparison of Examples 13 to 19, and 21 to 23 with Example 22, the high-temperature storage performance and cycling performance of the battery are further improved when the sum of the mass percentage W of the first additive and the mass percentage A of the second additive is in the range of 0.7% to 11%.

As can be seen from the comparison of Examples 13 to 17 with Examples 18 and 19, the mass percentage A of the second additive is controlled to be in the range of 0.1% to 7% based on the total mass meter of the electrolyte, which is conducive to further improving the cycling performance. As can be seen from the comparison of Examples 13, 15 to 16 with Examples 14 and 17, the mass percentage A of the second additive is further controlled to be 0.5% to 6.5%, which balances the DC resistance, the high-temperature storage performance and the cycling performance of the battery.

As can be seen from Examples 22 and 23, the second additive comprises at least two of fluoroethylene carbonate, 1, 3-propane sultone, and 1,2-difluoroethylene carbonate, which enables the battery to have a low DC resistance, a high energy density, and excellent high-temperature storage performance and cycling performance.

A composite solvent comprising at least two of ethylene carbonate, dimethyl carbonate, ethyl acetate, and methyl acetate is used in Examples 24 to 26, and a composite solvent comprising a carboxylate solvent, a cyclic carbonate solvent, and a linear carbonate solvent is used in Examples 27 and 28, which helps to reduce the DC resistance of the battery and further improves the cycling performance of the battery.

As can be seen from Examples 29 to 34, the injection coefficient is controlled to be 1 g/Ah to 3 g/Ah, so that the battery has excellent energy density, high-temperature storage performance and cycling performance. As can be seen from the comparison of Examples 20 to 33 with Examples 29 and 34, the injection coefficient is further controlled to be 1.5 g/Ah to 2.5 g/Ah, which may balance the energy density, the high-temperature storage performance and the cycling performance of the battery.

As can be seen from Examples 35 to 36 and 37 to 38, when the thickness of the positive electrode current collector is 4 µm to 14 µm or the thickness of the negative electrode current collector is 3 µm to 10 µm, it helps to improve the electronic conductivity of the current collector and improve the cycling performance of the battery; the thickness helps to provide a suitable space in the battery to accommodate the gas generated by the side reactions of the electrode plates, thereby enabling the battery to have excellent energy density, high-temperature storage performance and cycling performance.

It should be noted that the present application is not limited to the embodiments above. The above embodiments are only examples, and embodiments that have the same composition and exert the same effect as the technical ideas within the scope of the technical solution of the present application are included in the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

## Claims

1. A secondary battery, comprising a battery case having an accommodating cavity, a cell assembly disposed in the accommodating cavity, and an electrolyte comprising a first additive, the first additive being selected from a sulphate compound;
wherein based on the total mass of the electrolyte, a mass percentage W and a residual space R of the first additive satisfy: 0.03%≤W/R≤40%, and optionally 0.03%≤W/R≤20%;
where $R = \frac{V 1 - \left(V2+V3\right)}{C} mL / Ah$, V1 represents an internal volume of the accommodating cavity of the secondary battery; V2 represents a volume of the cell assembly; V3 represents a volume of the electrolyte; and C represents a discharge capacity of the secondary battery.

2. The secondary battery according to claim 1, wherein the sulphate compound comprises one or more of 4,4'-bis(ethylene sulfate), ethylene sulfate, diethyl sulfate, dimethyl sulfate, and 4,4'-bi(1,3,2-dioxathiolane)- 2,2,2,2-tetraoxide, and optionally comprises one or more of 4,4'-bis(ethylene sulfate) and ethylene sulfate.

3. The secondary battery according to claim 1 or 2, wherein based on the total mass of the electrolyte, the mass percentage W of the first additive is 0.045% to 2%, and optionally 0.1% to 2%.

4. The secondary battery according to any one of claims 1 to 3, wherein R is 0.05 mL/Ah to 3 mL/Ah, and optionally 0.1 mL/Ah to 1.5 mL/Ah.

5. The secondary battery according to any one of claims 1 to 4, wherein the electrolyte contains a second additive, the second additive being selected from one or more of a fluorocarbonate compound and a sulphonate compound.

6. The secondary battery according to claim 5, wherein the fluorocarbonate compound comprises one or more of fluoroethylene carbonate, 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro -2-methylethylene carbonate, or trifluoromethylethylene carbonate, and optionally comprises fluoroethylene carbonate and 1, 2-difluoroethylene carbonate; and/or
the sulfonate compound comprises one or more of 1,3-propane sultone, propene sultone, and 3-fluoro-1,3-propane sultone, and optionally comprises 1,3-propane sultone.

7. The secondary battery according to claim 5 or 6, wherein the second additive comprises fluoroethylene carbonate and 1,3-propane sultone; or the second additive comprises 1,2-difluoroethylene carbonate and 1,3-propane sultone;
wherein a mass ratio of the fluoroethylene carbonate or 1,2-difluoroethylene carbonate to the 1,3-propane sultone is (0.1-50):1, and optionally (0.1-30):1.

8. The secondary battery according to any one of claims 5 to 7, wherein based on the total mass of the electrolyte, the mass percentage W of the first additive and a mass percentage A of the second additive satisfy: 0.045%≤ W+A≤ 15%, and optionally 0.1% ≤W+A≤ 11%.

9. The secondary battery according to any one of claims 5 to 8, wherein based on the total mass of the electrolyte, the mass percentage A of the second additive is 0.05% to 10%, and optionally 0.5% to 7%.

10. The secondary battery according to any one of claims 1 to 9, wherein the cell assembly comprises a positive electrode current collector and a positive electrode film layer located on at least one side of the positive electrode current collector and comprising at least a positive electrode active material, and the positive electrode current collector has a thickness of 4 µm to 14 µm, and optionally 5 µm to 13 µm.

11. The secondary battery according to any one of claims 1 to 10, wherein the secondary battery comprises a negative electrode current collector, and the negative electrode current collector has a thickness of 3 µm to 10 µm, and optionally 4 µm to 8 µm.

12. The secondary battery according to any one of claims 1 to 11, wherein the secondary battery has an injection coefficient of 1 g/Ah to 3 g/Ah, and optionally 1.5 g/Ah to 2.5 g/Ah.

13. The secondary battery according to any one of claims 1 to 12, wherein the electrolyte comprises a solvent, the solvent comprising at least two of a carboxylate solvent, a cyclic carbonate solvent, and a linear carbonate solvent.

14. The secondary battery according to claim 13, wherein based on the total mass of the solvent, the cyclic carbonate solvent has a mass percentage X of 2% to 35%.

15. The secondary battery according to claim 13 or 14, wherein based on the total mass of the solvent, the cyclic carbonate solvent has a mass percentage X of 20% to 35%, the linear carbonate solvent has a mass percentage Y of 0% to 75%, and the carboxylate solvent has a mass percentage of (100% - X - Y).

16. The secondary battery according to any one of claims 12 to 15, wherein the carboxylate solvent comprises a structure represented by Formula I, 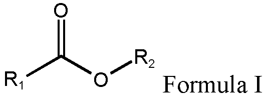
wherein R₁ and R₂ each independently comprise a C₁₋₁₀ alkyl group, and optionally, the carboxylate solvent comprises one or more of methyl formate, methyl acetate, ethyl acetate, butyl acetate, methyl propionate, methyl butyrate, ethyl butyrate, propyl butyrate, butyl butyrate, isopropyl acetate, and isoamyl acetate; and/or
the cyclic carbonate solvent comprises one or more of ethylene carbonate and propylene carbonate; and/or
the linear carbonate solvent comprises at least one of dimethyl carbonate, diethyl carbonate, methyl propyl carbonate and ethyl methyl carbonate.

17. The secondary battery according to claim 13 or 16, wherein the linear carbonate solvent comprises two of dimethyl carbonate, diethyl carbonate, methyl propyl carbonate and ethyl methyl carbonate.

18. The secondary battery according to claim 17, wherein the linear carbonate solvent comprises dimethyl carbonate and ethyl methyl carbonate, and a mass ratio of the dimethyl carbonate and the ethyl methyl carbonate is 5:90 to 70:10, and optionally 10:80 to 60:10.

19. The secondary battery according to any one of claims 1 to 18, wherein the secondary battery comprises one or more of a lithium secondary battery, a sodium-ion secondary battery, and a potassium-ion secondary battery.

20. An electrical apparatus, comprising the secondary battery according to any one of claims 1 to 19.
